# FASCICULE DE BREVET EUROPEEN

(11) **EP 2 710 607 B1**
(45) Date de publication et mention de la délivrance du brevet: **11.05.2016**
(21) Numéro de dépôt: 12720913.8
(22) Date de dépôt: 16.05.2012
(51) Int. Cl.: F24H 1/20, H01C 17/02, H05B 3/44, H05B 3/78, G21C 17/00, G21C 17/06, G21C 21/02

(54) **DISPOSITIF DE CHAUFFAGE ELECTRIQUE D'UN LIQUIDE, SON PROCEDE DE REALISATION ET APPLICATION A LA SIMULATION ELECTRIQUE DE CRAYONS DE COMBUSTIBLE NUCLEAIRE**
ELEKTRISCHE HEIZVORRICHTUNG ZUM ERHITZEN EINER FLÜSSIGKEIT, VERFAHREN ZU IHRER HERSTELLUNG UND VERWENDUNG BEI DER ELEKTRISCHEN SIMULATION VON KERNBRENNSTÄBEN
ELECTRICAL HEATING DEVICE FOR HEATING A LIQUID, METHOD FOR PRODUCING SAME, AND USE IN THE ELECTRICAL SIMULATION OF NUCLEAR FUEL RODS

(30) Priorité: 18.05.2011 FR 1154336
(43) Date de publication de la demande: 26.03.2014
(73) Titulaire: Commissariat à l'Énergie Atomique et aux Énergies Alternatives, 75015 Paris (FR)
(72) Inventeur: GROS D'AILLON, Luc, F-38320 Brie et Angonnes (FR); CUBIZOLLES, Géraud, F-38000 Grenoble (FR)
(74) Mandataire: Ahner, Philippe
(86) Numéro de dépôt international: PCT/EP2012/059187
(87) Numéro de publication internationale: WO 2012/156474

(56) Documents cités:
- CA-A1- 1 264 062
- US-A- 4 326 122
- US-A- 5 553 109
- US-A1- 2009 279 880

## Description

### DOMAINE TECHNIQUE

L'invention concerne un nouveau dispositif de chauffage électrique d'un liquide à flux thermique élevé.

L'application principale de l'invention est la réalisation d'un nouveau dispositif de simulation électrique de crayons de combustible nucléaire destinés à être assemblés dans des assemblages par des grilles de maintien et destinés à être utilisés dans des réacteurs dits de puissance, plus particulièrement ceux à eau pressurisée, (abréviation en français REP ou PWR en anglais). Comme décrit précisément ci-après, la mise en oeuvre d'un tel dispositif permet la qualification thermo-hydraulique des crayons de combustible en détectant l'occurrence de la crise d'ébullition du liquide dans lequel ils sont destinés à être immergés.

L'invention vise de manière générale à augmenter la durée de vie et la qualité des dispositifs de chauffage existants à flux thermique élevé, en particulier la qualification des dispositifs de simulation électrique de crayons de combustible nucléaire actuellement existants à flux thermique élevés.

Bien que décrite en référence à l'application principale, le dispositif selon l'invention peut être utilisé pour chauffer un liquide dans lequel il est immergé.

### ART ANTERIEUR

US 2009/0279880 décrit un dispositif de chauffage électrique inhibiteur de tartre et son procédé de fabrication, US 4326122 décrit un dispositif de chauffage électrique pour simulateurs de crayons de combustible nucléaire, CA 1264062 décrit un dispositif de chauffage à filament de carbone pour simulateurs de crayons de combustible nucléaire, US 5553109 décrit un procédé et un dispositif pour simuler un état transitoire d'un faisceau de crayons de combustible nucléaire.

Pour qualifier un assemblage de crayons de combustible nucléaire destiné à être utilisé dans un réacteur nucléaire de puissance à eau pressurisée (REP), il est nécessaire de procéder à des essais de crise d'ébullition. Plus précisément, il faut pouvoir détecter l'occurrence de la crise d'ébullition. En effet, la crise d'ébullition peut être définie de manière générale comme une excursion importante de température de paroi pour une faible variation des paramètres thermo-hydrauliques de contrôle. Elle se traduit concrètement par la dégradation brutale de l'échange thermique entre une paroi chauffante et le fluide caloporteur qui l'entoure. Ainsi, dans un réacteur REP, l'occurrence de ce phénomène pourrait conduire à la rupture de gaine du crayon de combustible nucléaire.

Jusqu'à présent, les dispositifs de simulation électrique de crayon de combustible nucléaire à flux thermique élevé utilisés peuvent être qualifiés de type à chauffage direct. En effet, la gaine du dispositif constitue également l'élément à fonction de résistor. Autrement dit, la gaine est chauffée directement.

Or, les assemblages de combustibles nucléaires modernes, notamment ceux destinés à être utilisés dans des réacteurs REP, ont des conceptions plus complexes et des performances thermiques plus élevées que celles des assemblages déjà éprouvés, ce qui tend à invalider les procédures de qualification habituelles notamment en ce qui concerne l'adéquation des dispositifs de simulation électrique des crayons assemblés dans un assemblage.

Ainsi, les inventeurs ont analysé que les grilles de maintien modernes qui forment des dérivations de courant importantes peuvent induire des dégradations rapides des dispositifs de simulation électrique de crayons de type à chauffage direct: les points de contacts créés entre les bossages de la grille de maintien en question et un crayon donné sont susceptibles de générer une surintensité du courant et donc une électrolyse locale, sources de dégradation rapide des crayons. De fait, les inventeurs ont considéré que les dispositifs de simulation électrique de type à chauffage direct pouvaient empêcher la qualification fiable des assemblages de combustibles.

Par ailleurs, selon le type de dispositifs à chauffage direct nécessaire, les gaines à fonction de résistor doivent être très minces pour adapter leur résistance électrique aux alimentations électriques disponibles, ce qui est très préjudiciable à la durée de vie des dispositifs de simulation en question et à la possibilité de qualifier avec fiabilité les assemblages.

En outre, l'utilisation d'un dispositif de simulation électrique à chauffage direct implique une isolation électrique de celui-ci performante et fiable sous les mêmes conditions de fonctionnement, ce qui ne peut s'effectuer qu'avec des technologies complexes et des matériaux onéreux, néanmoins fragiles, et à durée de vie limitée.

Enfin, par définition, les dispositifs de simulation électrique à chauffage direct ne peuvent être utilisés pour qualifier des assemblages de combustible nucléaire destinés à être immergés dans un caloporteur conducteur électrique. Or, les études de sureté des futurs réacteurs nucléaires à neutrons rapides (RNR) dits de IV^{ème} génération, dont le fonctionnement est assuré avec un caloporteur sodium (RNR-Na) vont également nécessiter des essais d'ébullition en sodium à flux thermique élevé. Le sodium ayant intrinsèquement une conductibilité électrique élevée, les dispositifs de simulation électrique à chauffage direct ne pourront être utilisés pour lesdits essais d'ébullition pour des réacteurs (RNR).

D'autres dispositifs de simulation électrique existants peuvent être qualifiés de type à chauffage indirect car les résistances ou résistors sont constitués de fils alimentés en courant triphasé.

Ces dispositifs ne sont pas satisfaisants car ils génèrent un flux thermique non homogène selon un profil en ressac transversalement à la gaine, c'est-à-dire un profil azimutal en ressac.

Le but de l'invention est donc de proposer un nouveau dispositif de simulation électrique d'un crayon de combustible nucléaire à flux thermique élevé qui ne présente pas tout ou partie des inconvénients précités et donc, qui soit fiable en générant un flux thermique homogène et qui présente une grande durée de vie, afin de réaliser un grand nombre d'essais d'ébullition fiables.

Un autre but de l'invention est de proposer un nouveau dispositif de simulation électrique d'un crayon de combustible nucléaire à flux thermique élevé qui permette d'obtenir des essais d'ébullition à coûts réduits et délais garantis.

Un but plus général de l'invention est de proposer un dispositif de chauffage électrique d'un liquide à flux thermique élevé et homogène en azimut, qui soit fiable et de grande durée de vie.

### EXPOSÉ DE L'INVENTION

Pour ce faire, l'invention a tout d'abord pour objet un dispositif de chauffage électrique de liquide comprenant :
- un premier tube en matériau conducteur électrique formant résistor,
- deux connexions électriques emmanchées chacune dans une des extrémités du résistor, les connexions électriques étant adaptées pour amener un courant continu à travers le résistor et le faire sortir respectivement,
- un élément intermédiaire, en matériau à la fois conducteur thermique et isolant électrique, entourant avec contact mécanique direct respectivement le résistor et les deux connexions électriques sur au moins une partie de leur longueur,
- un deuxième tube formant gaine, en matériau conducteur thermique et entourant avec contact mécanique direct l'élément intermédiaire conducteur thermique, la gaine étant destinée à être immergée, sur au moins une majeure partie de sa longueur, dans le liquide à chauffer.

Autrement dit, la solution selon l'invention consiste essentiellement à la fois à :
- utiliser le même type de résistor tubulaire que les dispositifs de simulation électrique à chauffage direct actuellement utilisés pour avoir un flux thermique élevé avec un profil axial imposé uniquement par la variation d'épaisseur du résistor et un profil transversal homogène, c'est-à-dire sans variation azimutale,
- alimenter ledit résistor tubulaire en courant continu,
- définir des dimensions radiales du résistor tubulaire réduites pour l'isoler électriquement par un élément intermédiaire isolant électriquement mais conducteur thermique, de préférence avec un coefficient de conduction thermique très élevé tel que le nitrure de bore et,
- chemiser l'ensemble résistor tubulaire/élément intermédiaire par une gaine en matériau conducteur thermique, de diamètre externe imposé de type de celui des gaines de crayons pour les réacteurs REP, avantageusement en métal inoxydable dans de l'eau déminéralisée.

Le dispositif de chauffage électrique selon l'invention, que l'on peut qualifier d'indirect (le résistor tubulaire chauffant indirectement le liquide par conduction thermique à travers l'élément intermédiaire et la gaine), permet d'atteindre un flux thermique élevé, jusqu'à plusieurs MW/m², avec les mêmes qualités métrologiques que l'on peut constater sur les dispositifs de simulation électrique à chauffage direct existants qui sont performants.

Autrement dit, on peut grâce au dispositif selon l'invention, qualifier des crayons de combustible nucléaire destinés à des réacteurs de puissance, type REP. En outre, du fait de son isolation électrique vis-à-vis de l'environnement extérieur, qui lui permet d'éliminer de nombreuses contraintes de montage, on peut aussi qualifier des assemblages de crayons de combustible nucléaire utilisant des grilles de maintien modernes sans risque de dégradation rapide du résistor tubulaire, dégradation rapide qui empêche la finalisation des essais de crise d'ébullition comme cela peut être le cas pour les dispositifs de simulation électrique à chauffage direct actuellement existants.

Afin de réduire les résistances thermiques d'interface entre les différents composants du dispositif, les contacts mécaniques directs à la fois entre élément intermédiaire et résistor et entre élément intermédiaire et gaine sont avantageusement des ajustements serrés.

On peut prévoir de préférence dans le dispositif selon l'invention, un ou plusieurs inserts mécaniques logé(s) à l'intérieur du résistor, le(s) insert(s) mécanique(s) étant adapté(s) pour permettre un soutien mécanique du résistor tubulaire. En particulier, de tels inserts peuvent avantageusement soutenir la paroi tubulaire du résistor en cas d'étirage de la gaine pour obtenir un rétreint de celle-ci sur l'ensemble du dispositif. De préférence encore, le(s) insert(s) mécanique(s) est (sont) en céramique, telle que magnésie, alumine, zircone. Des inserts céramiques offrent à la fois une bonne résistance mécanique et une forte résistivité électrique qui conviennent à la mise en oeuvre de l'invention.

De préférence, le résistor tubulaire est en Inconel 600 ou en alliage cupronickel 70/30.

De préférence également, l'élément intermédiaire isolant électrique et conducteur thermique est constitué d'une colonne de pluralité de pastilles percées en leur centre et empilées les unes sur les autres. Le montage de l'élément isolant autour du résistor est ainsi facilité. Les pastilles de l'élément intermédiaire sont de préférence en nitrure de bore ou en nitrure d'aluminium. En particulier, le nitrure de bore présente des caractéristiques thermiques et électriques qui conviennent parfaitement à la mise en oeuvre de l'invention. En outre, la fabrication de pastilles de nitrure de bore permet d'obtenir un élément intermédiaire compact.

A des fins d'anticorrosion, la gaine est de préférence en métal inoxydable dans de l'eau déminéralisée, typiquement de l'eau à 350°C voire 600°c en régime transitoire. De préférence, il s'agit par d'acier inoxydable 316L ou d'un alliage nickel/chrome/Fer, avec une proportion de Nickel, en masse, supérieure à 50 %, de préférence avec une composition à au moins 72 % de Nickel, 14 % à 17 % de Cr, 6 % à 10 % de Fer (alliage aussi appelé Inconel 600; il peut y avoir quelques éléments complémentaires, en faible proportion, tels que Mn (1 % maximum), et/ou Cu (0,5 % maximum), et/ou Si (0,5 % maximum), et/ou C, et/ou S).

Les deux connexions électriques sont de préférence des pièces pleines qui permettent une insertion avantageuse de thermocouples dans la gaine comme expliqué ci-après. De préférence, ces pièces pleines sont en matériau conducteur cuivreux ou nickel ou en molybdène si des traitements thermiques à haute température, particulièrement une hypertrempe, s'avèrent nécessaires.

Le dispositif selon l'invention constitue avantageusement un dispositif de simulation électrique d'un crayon de combustible nucléaire.

Il comprend alors une pluralité de thermocouples, avantageusement insérés chacun dans une rainure pratiquée sur la périphérie externe de la gaine. Ainsi, contrairement aux dispositifs de simulation électrique selon l'état de l'art, on peut positionner avec une grande précision les thermocouples. Ceux-ci sont typiquement de type N avec une gaine en Inconel 600.

L'invention a également pour objet un procédé de réalisation d'un dispositif de chauffage électrique d'un liquide, ledit dispositif comprenant :
- un premier tube en matériau conducteur électrique formant résistor,
- deux connexions électriques emmanchées chacune dans une des extrémités du résistor, les connexions électriques étant adaptées pour amener un courant continu à travers le résistor et le faire sortir respectivement,

- un élément intermédiaire, en matériau à la fois conducteur thermique et isolant électrique, entourant avec contact mécanique direct respectivement le résistor et les deux connexions électriques sur au moins une partie de leur longueur,
- un deuxième tube formant gaine, en matériau conducteur thermique et entourant avec contact mécanique direct l'élément intermédiaire, la gaine étant destinée à être immergée, sur au moins une majeure partie de sa longueur, dans le liquide à chauffer,
le procédé étant caractérisé en ce qu'il comprend au moins une étape de rétreint de la gaine sur l'élément intermédiaire et le résistor afin d'obtenir un ajustement serré entre eux.

L'étape de rétreint permet également avantageusement de densifier l'élément intermédiaire isolant électrique en augmentant sa conductibilité thermique.

Trois variantes alternatives peuvent être envisagées pour réaliser l'étape de rétreint :
- soit par une technique de martelage du diamètre externe de la gaine : les différents jeux au montage entre résistor, élément intermédiaire isolant solide et gaine sont alors comblés par diminution du diamètre externe obtenu par le martelage et ce avec expansion axiale,
- soit par mise sous pression isostatique du diamètre interne du résistor : les différents jeux au montage entre résistor, élément intermédiaire isolant solide et gaine sont alors comblés par expansion du diamètre interne par la pression isostatique et ce sans expansion axiale,
- soit par frettage thermique, en chauffant la gaine par effet Joule tout en refroidissant le résistor par un débit interne de caloporteur, pendant toute la durée de l'étape. Dans cette variante, les connexions électriques doivent être percées de préférence à une valeur de 3 mm.

Pour les variantes de rétreint par martelage ou par pression isostatique (expansion hydrostatique), on peut réaliser ces étapes au moins sur la longueur de gaine, avec les connexions électriques en place, une extension pouvant être adjointe à ces dernières.

L'invention a également pour objet un procédé de réalisation d'un dispositif de chauffage électrique d'un liquide, ledit dispositif comprenant :
- un premier tube en matériau conducteur électrique formant résistor,
- deux connexions électriques emmanchées chacune dans une des extrémités du résistor, les connexions électriques étant adaptées pour amener un courant continu à travers le résistor et le faire sortir respectivement,
- un élément intermédiaire, en matériau à la fois conducteur thermique et isolant électrique, entourant avec contact mécanique direct respectivement le résistor et les deux connexions électriques sur au moins une partie de leur longueur,
- un deuxième tube formant gaine, en matériau conducteur thermique et entourant avec contact mécanique direct l'élément intermédiaire, la gaine étant destinée à être immergée, sur au moins une majeure partie de sa longueur, dans le liquide à chauffer,
le procédé étant caractérisé en ce qu'il comprend successivement au moins une étape de dépôt de matériau céramique de l'élément intermédiaire sur le résistor par choupage, une étape de rectification de l'élément intermédiaire choupé sur le résistor, une étape de dépôt de matériau métallique de gaine sur l'élément intermédiaire par choupage et enfin une étape de rectification de la gaine métallique.

Les techniques de choupage utilisées dans le cadre de l'invention peuvent être toutes les techniques de dépôt de surface de métaux pour la gaine ou de céramique pour l'élément intermédiaire compatibles avec les spécifications requises, telles que le dépôt en phase vapeur, en phase liquide, électrolyse, épitaxie...

Les éléments choupés peuvent être rectifiés avec une très faible épaisseur afin de compenser leur conductivité relativement faible. Les inventeurs pensent que la zircone et l'alumine sont particulièrement adaptées à une étape de choupage et une étape de rectification.

Pour obtenir un dispositif de simulation électrique de crayon combustible nucléaire selon l'invention à flux thermique élevé et homogène, il faut veiller principalement à maitriser les températures maximales internes, liées à la géométrie et aux matériaux, et aux résistances thermiques d'interface.

On veille ainsi à minimiser la distance radiale à franchir par le flux thermique émis par le résistor puis le choix des matériaux constitutifs du résistor, gaine et élément intermédiaire permet de maximiser leur conduction thermique.

Enfin, grâce aux procédés selon l'invention, les résistances thermiques d'interface sont réduites par compression radiale obtenue par le rétreint de la gaine sur l'ensemble du dispositif ou par le choupage des différents éléments.

On réalise en outre avantageusement une pluralité de rainures longitudinales sur le diamètre externe de la gaine pour y insérer dans chacune un thermocouple afin de constituer un dispositif de simulation électrique de crayon de combustible nucléaire.

Les thermocouples ainsi insérés dans la gaine à différentes positions azimutales et longitudinales sont ainsi positionnées très précisément, typiquement de l'ordre du millimètre.

### BRÈVE DESCRIPTION DES DESSINS

D'autres avantages et caractéristiques de l'invention ressortiront mieux à la lecture de la description détaillée d'un mode de réalisation de l'invention fait, à titre illustratif et non limitatif en référence aux figures parmi lesquelles :
- la figure 1 est une vue en coupe longitudinale d'un dispositif de simulation électrique d'un crayon de combustible nucléaire selon l'art antérieur,
- la figure 2 est une vue en coupe longitudinale d'un dispositif de simulation électrique d'un crayon de combustible nucléaire selon un premier mode de réalisation de l'invention,
- la figure 3 est une vue en coupe longitudinale d'un dispositif de simulation électrique d'un crayon de combustible nucléaire selon un deuxième mode de réalisation de l'invention.

### EXPOSÉ DÉTAILLÉ DE MODES DE RÉALISATION PARTICULIERS

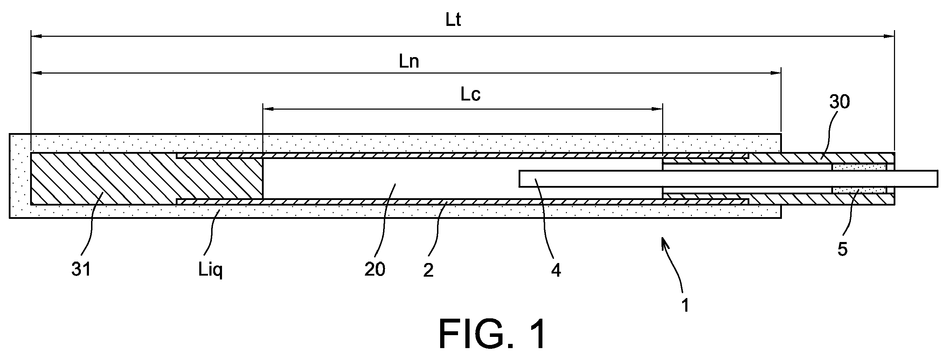

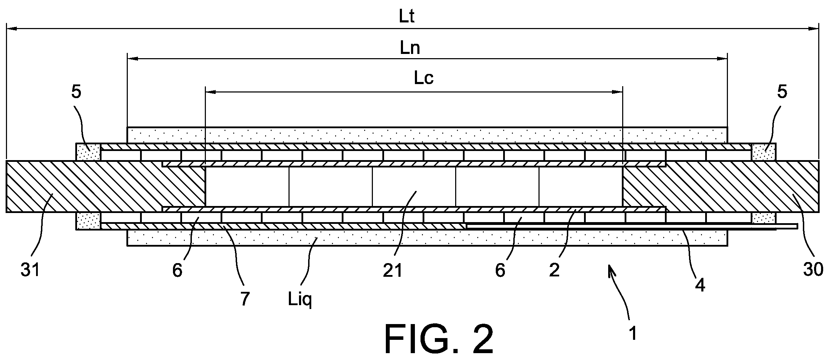

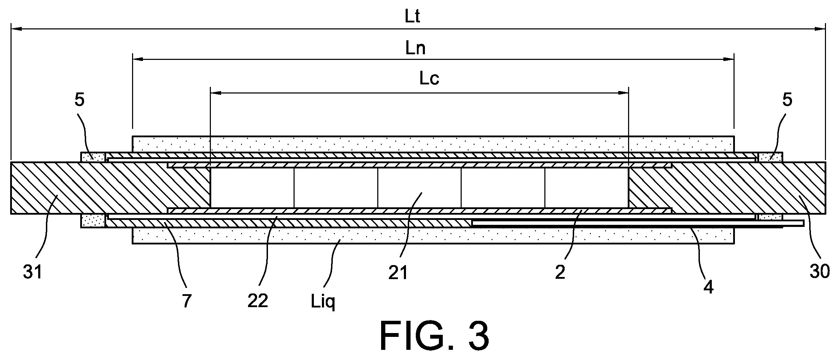

On précise ici que les dispositifs de simulation électrique selon l'état de l'art (figure 1) est selon l'invention (figures 2 et 3) doivent permettre de détecter l'occurrence de la crise d'ébullition définie comme une excursion importante de température de paroi pour une faible variation des paramètres thermo hydrauliques de contrôle.

On précise encore que sur l'ensemble des figures 1 à 3, les références Lt, Ln et Lc désignent respectivement :
Lt : longueur hors tout du dispositif ;
Ln : longueur du dispositif immergée dans le liquide ;
Lc : longueur chauffante du dispositif.

On peut noter que le montage du dispositif de simulation électrique selon l'état de l'art (figure 1) prévoit d'immerger une connexion électrique tandis que le montage d'un dispositif de simulation électrique selon l'invention (figures 2 et 3) permet de n'immerger aucune connexion électrique, ce qui est avantageux car il n'y a pas lieu de réaliser une isolation électrique sophistiquée par rapport à l'environnement extérieur.

On précise encore que pour réaliser les essais de crise d'ébullition, un dispositif de simulation électrique selon l'invention est agencé au sein d'un assemblage (non représenté) d'une pluralité de dispositifs identiques avec grilles de maintien à l'intérieur d'une cuve (non représentée) contenant le liquide à chauffer, les deux connexions électriques faisant saillie de la cuve en étant isolées de celle-ci par des moyens ad' hoc et le résistor tubulaire est alimenté en courant continu. Pour des réacteurs à eau pressurisée, le liquide à chauffer est l'eau. Pour d'autres applications, le liquide à chauffer peut être différent. Typiquement, pour les réacteurs à neutrons rapides RNR-Na, le liquide à chauffer est du sodium.

Pour ces essais de crise d'ébullition les paramètres suivants sont imposés sur chaque dispositif de simulation électrique :
- longueur chauffante Lc, typiquement de 1 à 4,3 mètres ;
- profil axial de flux thermique par crayon, typiquement de 0.2 à 3 MW/m² ;
- diamètre externe de gaine typiquement de 8.5 à 12.9 mm ;
- puissance électrique totale, typiquement de 0.5 à 10 MW.

De même, pour ces essais, les paramètres suivants sont imposés sur l'assemblage entre eux de plusieurs dispositifs de simulation électrique :
- le type et les positions des grilles de maintien, définissant le type et le pas du réseau d'un assemblage,
- avec un nombre réduit de dispositifs par assemblage, typiquement un nombre de 19 à 37.

Les conditions de fonctionnement du liquide à chauffer référencé Liq sur les figures (de l'eau déminéralisée) sont les suivantes :
- pression de 1 à 172 bars,
- température de 50 à 350 °C,
- un débit de 0.1 à 40 kg/s, sous les conditions de flux thermique et de puissance totale appliquées à chaque dispositif comme détaillé ci-dessus.

Par souci de clarté, des mêmes éléments du dispositif selon l'état de l'art et selon l'invention portent les mêmes références.

En figure 1 est représenté un dispositif de simulation électrique selon l'état de l'art, qualifié à chauffage direct. Le dispositif 1 selon l'état de l'art est constitué d'un résistor 2 sous la forme d'un tube qui sert également de gaine. Autrement dit, la gaine tubulaire 2 a également la fonction de résistor électrique, c'est-à-dire la pièce alimentée en courant pour chauffer le liquide dans lequel le dispositif est immergé. L'intérieur 20 du résistor/gaine tubulaire 2 est rempli d'azote pressurisé. Deux connexions électriques 30, 31 sont emmanchées chacune dans une des extrémités de la gaine/résistor 2. L'une des connexions 30 est celle d'alimentation du courant : elle est percée en son centre pour loger les thermocouples d'instrumentation 4 qui s'étendent longitudinalement selon l'axe du dispositif à l'intérieur 20 de la gaine.

De ce côté, l'étanchéité de l'azote pressurisé à l'intérieur 20 de la gaine 2 est assurée à la fois par la connexion 30 elle-même et par un bouchon d'extrémité 5 en matériau isolant électrique. L'autre 31 des connexions est celle de sortie du courant : elle est pleine et sert donc également de bouchon d'étanchéité.

Les inconvénients majeurs du dispositif de simulation électrique selon l'état de l'art, de type à chauffage direct, tel que représenté en figure 1 peuvent être détaillés de la manière suivante :
- il existe de nombreuses contraintes de montage du dispositif dans la cuve d'essai,
- en cas d'utilisation de grilles de maintien, celles-ci constituent des dérivations de courant qui peuvent dégrader très rapidement la gaine/résistor 2 chauffée directement par le courant d'alimentation : cela peut empêcher la finalisation des essais. Cela est d'autant plus vrai pour des grilles de maintien de conception moderne, car plus épaisses et surtout plus hautes que des grilles de maintien de conception plus ancienne ;
- il ne peut être utilisé pour réaliser des essais de crise d'ébullition d'un liquide à conductibilité électrique élevée, tel que le sodium envisagé sur les réacteurs RNR-Na de IVème génération.

Pour remédier à ces inconvénients tout en conservant la possibilité d'atteindre des flux thermique élevés, de plusieurs MW/m², nécessaires à la qualification des combustibles et les mêmes qualités métrologiques qu'un dispositif 1 selon l'état de l'art, les inventeurs ont pensé tout d'abord à découpler la fonction gaine de la fonction résistor du dispositif.

Aussi, le dispositif 1 selon l'invention consiste essentiellement en :
- un résistor 2 de même type de résistor tubulaire que celui du dispositif 1 selon l'état de l'art, représenté en figure 1, pour avoir un flux thermique élevé avec un profil axial imposé uniquement par la variation d'épaisseur du résistor et un profil transversal homogène, c'est-à-dire sans variation azimutale,
- des dimensions radiales du résistor tubulaire réduites pour l'isoler électriquement par un élément intermédiaire 6, 22 isolant électriquement rajouté mais conducteur thermique, de préférence avec un coefficient de conduction thermique très élevé,
- une gaine 7 en matériau conducteur thermique qui chemise l'ensemble résistor tubulaire 2/élément intermédiaire 6, 22, le diamètre externe de ladite gaine étant celui imposé comme indiqué ci-dessus (8.5 à 12.9 mm), c'est-à-dire celui des gaines de crayons de combustible nucléaires destinés à des réacteurs REP.

En outre, selon l'invention on alimente, par la connexion 30, le résistor tubulaire 2 en courant continu. Pour les autres applications que la qualification du combustible nucléaire, l'alimentation électrique peut être faite en courant alternatif monophasé.

Le mode de réalisation de la figure 2 prévoit en tant qu'élément intermédiaire isolant électriquement et conducteur thermique une colonne de pastilles 6 percées en leur centre, empilées les unes sur les autres, et emmanchées autour du résistor tubulaire 2 sur toute sa longueur et sur une partie des connexions électriques 30, 31.

Le mode de réalisation de la figure 3 prévoit en tant qu'élément intermédiaire isolant électriquement et conducteur thermique un revêtement céramique 22 déposé sous forme liquide déposé par projection (choupage) directement sur le résistor tubulaire 2.

Des inserts mécaniques 21 en céramique sont empilés à l'intérieur du résistor 2 afin de soutenir sa paroi, en particulier lorsque la gaine s'étire pendant une étape de rétreint par martelage. On peut aussi prévoir du gaz sous pression en lieu et place des inserts céramiques 21.

Quel que soit le mode de réalisation illustré, afin de réduire le plus possible les résistances thermiques d'interface entre résistor 2/élément isolant intermédiaire 22, 6/gaine 7, on réalise une compression radiale de l'ensemble obtenu par un rétreint de la gaine 2 sur le reste 22,6 ; 7 du dispositif 1. Cette opération de rétreint permet également avantageusement de densifier l'élément intermédiaire isolant électrique sous formes de pastilles empilées 6 en augmentant leurs conductivité thermique.

L'instrumentation de mesure pour assurer les essais de crise d'ébullition est assurée par des thermocouples, de préférence huit thermocouples 4 de type N gainés en inconel 600 (alliage nickel/chrome/Fer, avec une composition à au moins 72 % de Nickel, 14 % à 17 % de Cr, 6 % à 10 % de Fer ; il peut y avoir quelques éléments complémentaires, en faible proportion, tels que Mn (1 % maximum), et/ou Cu (0,5 % maximum), et/ou Si (0,5 % maximum), et/ou C, et/ou S), agencés chacun selon différentes positions axiales et azimutales à des endroits spécifiés avec une tolérance de +/- 2 mm.

Avantageusement, comme montré en figures 2 et 3, chaque thermocouple 4 est inséré, après l'étape de rétreint, directement dans une rainure pratiquée sur le diamètre externe de gaine 7. On peut ainsi positionner très précisément avec la tolérance ci-dessus les thermocouples.

Des éléments d'étanchéité 5 en résine sont prévus autour de chaque connexion électrique 30, 31 pour isoler électriquement le résistor 2 et ses connexions 30, 31 de la gaine 7.

A titre d'exemple, on envisage des dispositifs de simulation électrique 1 selon l'invention sont donnés avec les dimensions et matériaux comme suit :

### DIMENSIONS DU DISPOSITIF 1 SELON FIGURES 2 ET 3 :

- dispositif 1 complet :
   - Longueur immergée Ln : 1,2 à 4,5 m ;
   - Longueur totale Lt : 1,5 a 4,8 m
- gaine 7 :
   - diamètre externe : 8,5 à 12,9 mm,
   - Epaisseur : ∼ 1 mm,

   - résistor 2 :
      - longueur chauffante Lc : 1 à 4,3 m,
      - diamètre externe inférieur d'environ 2 mm au diamètre interne de la gaine 7 (figure 2),
      - diamètre externe inférieur d'environ 0.5 mm au diamètre interne de la gaine 7 (figure 3),
      - diamètre interne selon la résistance électrique considérée,
   - élément intermédiaire isolant électrique et conducteur thermique :
      - Epaisseur de pastilles 6 (figure 2) : environ 2 mm,
      - Epaisseur du revêtement céramique 22 : environ 0.5 mm,
- Thermocouple 4 avec gaine : diamètre d'environ 0.5 mm.

### MATERIAUX DU DISPOSITIF 1 SELON FIGURES 2 ET 3 :

- gaine 7 : Inconel 600 ou acier inoxydable 316 L,
- résistor 2 : Inconel 600 ou cupronickel 70/30,
- élément intermédiaire isolant électrique et conducteur thermique : pastilles 6 empilées en nitrure de bore ou en nitrure d'aluminium et revêtement céramique 22 en zircone,
- thermocouple 4 : gaine en Inconel 600 ou en acier inoxydable 316 L,
- connexions électrique 30, 31: cuivre, nickel ou molybdène,
- inserts céramiques 21 : magnésie ou alumine ou zircone,
- éléments d'étanchéité 5 électriquement isolantes : résine ou silicone si la température locale reste relativement faible.

Bien que décrit exclusivement en tant que dispositif de simulation électrique d'un crayon de combustible nucléaire pour réaliser des essais de crise d'ébullition, le dispositif selon l'invention 1 qui vient d'être décrit aux figures 2 et 3 peut tout aussi bien constituer de manière plus générale un dispositif de chauffage électrique d'un liquide, plus particulièrement lorsqu'un flux thermique élevé est requis, typiquement jusqu'à quelques MW/m².

Ainsi, un dispositif selon l'invention peut remplacer avantageusement les cannes chauffantes actuellement existantes dont la puissance surfacique est limitée :
- par sa technologie de conception lorsque celle-ci implique des températures en son sein trop élevées du fait des matériaux utilisés uniquement pour des raisons thermiques ou du fait de défaut d'isolation électrique,
- par les capacités d'échanges du fluide caloporteur environnant, liées à ses propriétés physiques intrinsèques (conductibilité thermique, viscosité...) ou à ses conditions d'écoulement (faibles débits, fortes températures...).

Dans le cas où un dispositif selon l'invention est effectivement utilisé en tant que dispositif de chauffage, ses deux extrémités servent à l'alimentation électrique.

## Revendications

1. Dispositif (1) de chauffage électrique de liquide (Liq) comprenant :
- un premier tube (2) en matériau conducteur électrique formant résistor,
- deux connexions électriques (30, 31) emmanchées chacune dans une des extrémités du résistor, les connexions électriques étant adaptées pour amener un courant continu à travers le résistor (2) et le faire sortir respectivement,
- un élément intermédiaire (6, 22), en matériau à la fois conducteur thermique et isolant électrique, entourant avec contact mécanique direct respectivement le résistor et les deux connexions électriques sur au moins une partie de leur longueur,
- un deuxième tube (7) formant gaine, en matériau conducteur thermique et entourant avec contact mécanique direct l'élément intermédiaire conducteur thermique, la gaine étant destinée à être immergée, sur au moins une majeure partie de sa longueur, dans le liquide à chauffer.

2. Dispositif (1) de chauffage électrique de liquide selon la revendication 1, dans lequel les contacts mécaniques directs à la fois entre élément intermédiaire (4) et résistor (2) et entre élément intermédiaire (4) et gaine (7) sont des ajustements serrés.

3. Dispositif (1) de chauffage électrique de liquide selon la revendication 1 ou 2, comprenant en outre un ou plusieurs inserts mécaniques (21) logé(s) à l'intérieur du résistor, le(s) insert(s) mécanique(s) étant adapté(s) pour permettre un soutien mécanique du résistor tubulaire.

4. Dispositif de chauffage électrique de liquide selon la revendication 3, dans lequel le(s) insert(s) mécanique(s) (21) est (sont) en céramique, telle que magnésie, alumine, zircone.

5. Dispositif de chauffage électrique de liquide selon l'une quelconque des revendications précédentes, dans lequel le résistor tubulaire (2) est en un alliage nickel/chrome/Fer, avec une proportion de Nickel, en masse, à au moins 72 % de Nickel, 14 % à 17 % de Cr, 6 % à 10 % de Fer ou en alliage cupronickel 70/30.

6. Dispositif de chauffage électrique de liquide selon l'une quelconque des revendications précédentes, dans lequel l'élément intermédiaire (4) isolant électrique et conducteur thermique est constitué d'une colonne de pluralité de pastilles (6) percées en leur centre et empilées les unes sur les autres.

7. Dispositif de chauffage électrique de liquide selon la revendication 6, dans lequel les pastilles (6) de l'élément intermédiaire sont en nitrure de bore ou en nitrure d'aluminium.

8. Dispositif de chauffage électrique de liquide selon l'une quelconque des revendications précédentes, dans lequel la gaine (7) est en métal inoxydable dans de l'eau déminéralisée.

9. Dispositif de chauffage électrique de liquide selon la revendication 8, dans lequel la gaine est en un alliage nickel/chrome/Fer, avec une proportion de Nickel, en masse, à au moins 72 % de Nickel, 14 % à 17 % de Cr, 6 % à 10 % de Fer ou en acier inoxydable 316L.

10. Dispositif de chauffage électrique de liquide selon l'une quelconque des revendications précédentes, dans lequel les deux connexions électriques (30, 31) sont des pièces pleines.

11. Dispositif de chauffage électrique de liquide selon la revendication 10, dans lequel les deux connexions électriques sont en cuivre, nickel ou en molybdène.

12. Dispositif de chauffage électrique de liquide selon l'une quelconque des revendications précédentes, constituant un dispositif (1) de simulation électrique d'un crayon de combustible nucléaire.

13. Dispositif de simulation électrique d'un crayon de combustible nucléaire selon la revendication 12, comprenant une pluralité de thermocouples (4) insérés chacun dans une rainure pratiquée sur la périphérie externe de la gaine.

14. Dispositif de simulation électrique d'un crayon de combustible nucléaire selon la revendication 13, dans lequel les thermocouples sont de type N avec une gaine en un alliage nickel/chrome/Fer, avec une proportion de Nickel, en masse, à au moins 72 % de Nickel, 14 % à 17 % de Cr, 6 % à 10 % de Fer.

15. Procédé de réalisation d'un dispositif de chauffage électrique d'un liquide (Liq), ledit dispositif (1) comprenant :
- un premier tube (2) en matériau conducteur électrique formant résistor,
- deux connexions électriques (30, 31) emmanchées chacune dans une des extrémités du résistor, les connexions électriques étant adaptées pour amener un courant continu à travers le résistor et le faire sortir respectivement,
- un élément intermédiaire (6, 22), en matériau à la fois conducteur thermique et isolant électrique, entourant avec contact mécanique direct respectivement le résistor et les deux connexions électriques sur au moins une partie de leur longueur,
- un deuxième tube (7) formant gaine, en matériau conducteur thermique et entourant avec contact mécanique direct l'élément intermédiaire, la gaine étant destinée à être immergée, sur au moins une majeure partie de sa longueur, dans le liquide à chauffer,
le procédé étant **caractérisé en ce qu'**il comprend au moins une étape de rétreint de la gaine (7) sur l'élément intermédiaire (6, 22) et le résistor (2) afin d'obtenir un ajustement serré entre eux.

16. Procédé de réalisation selon la revendication précédente, selon lequel on réalise l'étape de rétreint par une technique de martelage du diamètre externe de la gaine.

17. Procédé de réalisation selon la revendication 15, selon lequel on réalise l'étape de rétreint par mise sous pression isostatique du diamètre interne du résistor.

18. Procédé de réalisation selon la revendication 15, selon lequel on réalise l'étape de rétreint par frettage thermique, en chauffant la gaine par effet Joule tout en refroidissant le résistor par un débit interne de caloporteur, pendant toute la durée de l'étape.

19. Procédé de réalisation d'un dispositif de chauffage électrique d'un liquide (Liq), ledit dispositif (1) comprenant :
- un premier tube (2) en matériau conducteur électrique formant résistor,
- deux connexions électriques (30, 31) emmanchées chacune dans une des extrémités du résistor, les connexions électriques étant adaptées pour amener un courant continu à travers le résistor et le faire sortir respectivement,
- un élément intermédiaire (6, 22), en matériau à la fois conducteur thermique et isolant électrique, entourant avec contact mécanique direct respectivement le résistor et les deux connexions électriques sur au moins une partie de leur longueur,
- un deuxième tube (7) formant gaine, en matériau conducteur thermique et entourant avec contact mécanique direct l'élément intermédiaire, la gaine étant destinée à être immergée, sur au moins une majeure partie de sa longueur, dans le liquide à chauffer,
le procédé étant **caractérisé en ce qu'**il comprend successivement au moins une étape de dépôt de matériau céramique de l'élément intermédiaire sur le résistor par projection, une étape de rectification de l'élément intermédiaire ainsi déposé sur le résistor, une étape de dépôt de matériau métallique de gaine sur l'élément intermédiaire par projection et enfin une étape de rectification de la gaine métallique.

20. Procédé de réalisation selon l'une des revendications 15 à 19, selon lequel une fois l'étape de rétreint réalisée ou l'étape de rectification de la gaine métallique, on réalise une pluralité de rainures longitudinales sur le diamètre externe de la gaine pour y insérer dans chacune un thermocouple (4) afin de constituer un dispositif de simulation électrique de crayon de combustible nucléaire.

## Patentansprüche

1. Vorrichtung (1) zur elektrischen Erhitzung einer Flüssigkeit (Liq), wobei die Vorrichtung Folgendes aufweist:
- ein erstes Rohr (2) aus einem elektrisch leitfähigem Material, welches einen Widerstand bildet;
- zwei elektrische Verbindungen (30, 31), welche je an einem der Enden des Widerstands ansetzen, wobei die elektrischen Verbindungen so ausgelegt sind, dass sie Gleichstrom durch den Widerstand (2) hindurchführen beziehungsweise aus diesem herausführen;
- ein Zwischenelement (6, 22) aus einem gleichzeitig wärmeleitenden und elektrisch isolierenden Werkstoff, welches den Widerstand beziehungsweise die zwei elektrischen Verbindungen über zumindest einen Teil ihrer Länge entlang mit direktem mechanischen Kontakt umgibt;
- ein zweites Rohr (7), welches eine Ummantelung bildet, aus einem wärmeleitenden Material, und welches mit direktem mechanischen Kontakt das wärmeleitende Zwischenelement umgibt, wobei die Ummantelung dazu bestimmt ist, zumindest mit einem Großteil ihrer Länge in die zu erhitzende Flüssigkeit eingetaucht zu werden.

2. Vorrichtung (1) zur elektrischen Erhitzung einer Flüssigkeit nach Anspruch 1, in welcher die direkten mechanischen Kontakte gleichzeitig zwischen Zwischenelement (4) und Widerstand (2) und zwischen Zwischenelement (4) und Ummantelung (7) Presspassungen sind.

3. Vorrichtung (1) zur elektrischen Erhitzung einer Flüssigkeit nach Anspruch 1 oder 2, welches darüber hinaus einen oder mehrere mechanische Einsätze (21) aufweist, welche(r) im Inneren des Widerstands aufgenommen ist/sind, wobei der Einsatz oder die Einsätze so ausgelegt ist/sind, dass er/sie eine mechanische Stütze des rohrförmigen Widerstands ermöglicht/ermöglichen.

4. Vorrichtung zur elektrischen Erhitzung einer Flüssigkeit nach Anspruch 3, in welcher der mechanische Einsatz oder die mechanischen Einsätze (21) aus Keramik ist/sind, wie z.B. Magnesia, Aluminiumoxid, Zirkonoxid.

5. Vorrichtung zur elektrischen Erhitzung einer Flüssigkeit nach einem der vorhergehenden Ansprüche, in welcher der rohrförmige Widerstand (2) aus einer Nickel/Chrom/Eisen-Legierung besteht, mit einem Anteil von mindestens 72 Gew.-% Nickel, 14-17 Gew.-% Chrom, 6-10 Gew.-% Eisen, oder aus einer Legierung auf Kupfer-Nickel-Basis bzw. Kupfernickel 70/30.

6. Vorrichtung zur elektrischen Erhitzung einer Flüssigkeit nach einem der vorhergehenden Ansprüche, in welcher das elektrisch isolierende und wärmeleitende Zwischenelement (4) aus einem Feld mit einer Vielzahl von Chips oder Pellets (6) besteht, welche mittig durchbohrt und aufeinandergeschichtet sind.

7. Vorrichtung zur elektrischen Erhitzung einer Flüssigkeit nach Anspruch 6, in welcher die Chips oder Pellets (6) des Zwischenelements aus Bornitrid oder aus Aluminiumnitrid bestehen.

8. Vorrichtung zur elektrischen Erhitzung einer Flüssigkeit nach einem der vorhergehenden Ansprüche, in welcher die Ummantelung (7) aus einem in entmineralisiertem Wasser nicht oxidierbaren bzw. nichtrostenden Metall besteht.

9. Vorrichtung zur elektrischen Erhitzung einer Flüssigkeit nach Anspruch 8, in welcher die Ummantelung aus einer Nickel/Chrom/Eisen-Legierung besteht, mit einem Anteil von mindestens 72 Gew.-% Nickel, 14-17 Gew.-% Chrom, 6-10 Gew.-% Eisen oder aus rostfreiem Stahl 316L.

10. Vorrichtung zur elektrischen Erhitzung einer Flüssigkeit nach einem der vorhergehenden Ansprüche, in welcher die zwei elektrischen Verbindungen (30, 31) massive Bauteile sind.

11. Vorrichtung zur elektrischen Erhitzung einer Flüssigkeit nach Anspruch 10, in welcher die zwei elektrischen Verbindungen aus Kupfer, Nickel oder Molybdän hergestellt sind.

12. Vorrichtung zur elektrischen Erhitzung einer Flüssigkeit nach einem der vorhergehenden Ansprüche, welche eine Vorrichtung (1) zur elektrischen Simulation eines Kernbrennstabs bildet.

13. Vorrichtung zur elektrischen Simulation eines Kernbrennstabs nach Anspruch 12, welche eine Vielzahl von Thermoelementen (4) aufweist, welche jeweils in eine auf dem Außenumfang der Ummantelung gebildeten Nut eingebettet sind.

14. Vorrichtung zur elektrischen Simulation eines Kernbrennstabs nach Anspruch 13, in welcher die Thermoelemente vom Typ N sind, mit einer Ummantelung aus einer Nickel/Chrom/Eisen-Legierung mit einem Anteil von mindestens 72 Gew.-% Nickel, 14-17 Gew.-% Chrom, 6-10 Gew.-% Eisen.

15. Verfahren zur Herstellung einer Vorrichtung zur elektrischen Erhitzung einer Flüssigkeit (Liq), wobei die Vorrichtung (1) Folgendes umfasst:
- ein erstes Rohr (2) aus einem elektrisch leitfähigen Material, welches einen Widerstand bildet;
- zwei elektrische Verbindungen (30, 31), welche je an einem der Enden des Widerstands ansetzen, wobei die elektrischen Verbindungen so ausgelegt sind, dass sie Gleichstrom durch den Widerstand (2) hindurchführen beziehungsweise aus diesem herausführen;
- ein Zwischenelement (6, 22) aus einem gleichzeitig wärmeleitenden und elektrisch isolierendem Werkstoff, welches den Widerstand beziehungsweise die zwei elektrischen Verbindungen über zumindest einen Teil ihrer Länge entlang mit direktem mechanischen Kontakt umgibt;
- ein zweites Rohr (7), welches eine Ummantelung bildet, aus einem wärmeleitenden Material, und welches mit direktem mechanischen Kontakt das wärmeleitende Zwischenelement umgibt, wobei die Ummantelung dazu bestimmt ist, zumindest mit einem Großteil ihrer Länge in die zu erhitzende Flüssigkeit eingetaucht zu werden,
wobei das Verfahren **dadurch gekennzeichnet ist, dass** es zumindest einen Schritt der Passung oder Schrumpfung der Ummantelung (7) auf das Zwischenelement (6, 22) und auf den Widerstand (2) umfasst, um eine enge Passung bzw. Presspassung zwischen diesen zu erhalten.

16. Verfahren zur Herstellung nach dem vorhergehenden Anspruch, gemäß welchem der Schritt der Passung bzw. Schrumpfung durch eine Technik des Hämmerns des Außendurchmessers der Ummantelung realisiert wird.

17. Verfahren zur Herstellung nach Anspruch15, gemäß welchem der Schritt der Passung bzw. Aufschrumpfung realisiert wird, indem der Innendurchmesser des Widerstands unter isostatischen Druck gesetzt wird.

18. Verfahren zur Herstellung nach Anspruch 15, gemäß welchem der Schritt der Presspassung bzw. Aufschrumpfung durch thermisches Schrumpfen realisiert wird, indem die Ummantelung durch den Joule-Effekt bzw. Stromwärme erwärmt wird, während der Widerstand durch einen internen Durchfluss von Kühlmittel während der gesamten Dauer des Schrittes abgekühlt wird.

19. Verfahren zur Herstellung einer Vorrichtung zur elektrischen Erhitzung einer Flüssigkeit (Liq), wobei die Vorrichtung Folgendes umfasst:
- ein erstes Rohr (2) aus einem elektrisch leitfähigem Material, welches einen Widerstand bildet;
- zwei elektrische Verbindungen (30, 31), welche je an einem der Enden des Widerstands ansetzen, wobei die elektrischen Verbindungen so ausgelegt sind, dass sie Gleichstrom durch den Widerstand hindurchführen beziehungsweise aus diesem herausführen;
- ein Zwischenelement (6, 22) aus einem gleichzeitig wärmeleitenden und elektrisch isolierenden Werkstoff, welches den Widerstand beziehungsweise die zwei elektrischen Verbindungen über zumindest einen Teil ihrer Länge entlang mit direktem mechanischen Kontakt umgibt;
- ein zweites Rohr (7), welches eine Ummantelung bildet, aus einem wärmeleitenden Material, und welches mit direktem mechanischen Kontakt das wärmeleitende Zwischenelement umgibt, wobei die Ummantelung dazu bestimmt ist, zumindest mit einem Großteil ihrer Länge in die zu erhitzende Flüssigkeit eingetaucht zu werden,
wobei das Verfahren **dadurch gekennzeichnet ist, dass** es nachfolgend zumindest einen Schritt der Ausbildung von keramischem Material des Zwischenelements auf dem Widerstand durch Projektion, einen Schritt des Schleifens des auf diese Weise auf dem Widerstand ausgebildeten Zwischenelements, einen Schritt der Ausbildung von metallischem Material der Ummantelung auf dem Zwischenelement durch Projektion und schließlich einen Schritt des Schleifens der metallischen Ummantelung.

20. Verfahren zur Herstellung nach einem der Ansprüche 15 bis 19, gemäß welchem dann, sobald der Schritt der Aufschrumpfung bzw. Presspassung oder der Schritt des Schleifens der metallischen Ummantelung durchgeführt wurde, eine Vielzahl von Längsnuten auf dem Außendurchmesser der Ummantelung hergestellt werden, um dort in jeder ein Thermoelement (4) einzubetten, um eine Vorrichtung zur elektrischen Simulation eines Kernbrennstabs zu bilden.

## Claims

1. Device (1) for the electrical heating of liquid (Liq), comprising:
- a first tube (2) made from electrically conductive material forming a resistor,
- two electrical connections (30, 31) each fitted in one of the ends of the resistor, the electrical connections being adapted to bring a direct current through the resistor (2) and to make it emerge respectively,
- an intermediate element (6, 22), made from material that is both thermally conductive and electrically insulating, surrounding, with direct mechanical contact, respectively the resistor and the two electrical connections over at least part of their length,
- a second tube (7) forming a sheath, made from thermally conductive material and surrounding the thermally conductive intermediate element with direct mechanical contact, the sheath being intended to be immersed, over at least a major part of its length, in the liquid to be heated.

2. Device (1) for the electrical heating of liquid according to claim 1, wherein the direct mechanical contacts both between intermediate element (4) and resistor (2) and between intermediate element (4) and sheath (7) are tight fits.

3. Device (1) for the electrical heating of liquid according to claim 1 or 2, also comprising one or more mechanical inserts (21) housed inside the resistor, the mechanical insert or inserts being adapted to enable mechanical support of the tubular resistor.

4. Device for the electrical heating of liquid according to claim 3, wherein the mechanical insert or inserts (21) is or are made from ceramic, such as magnesia, alumina or zirconia.

5. Device for the electrical heating of liquid according to any one of the preceding claims, wherein the tubular resistor (2) is made from a nickel/chromium/iron alloy, with a proportion of nickel, by mass, of at at least 72% nickel, 14% to 17% Cr and 6% to 10% iron or made from 70/30 cupronickel alloy.

6. Device for the electrical heating of liquid according to any one of the preceding claims, wherein the electrically insulating and thermally conductive intermediate element (4) consists of a column of a plurality of pellets (6) pierced at their centre and stacked on one another.

7. Device for the electrical heating of liquid according to claim 6, wherein the pellets (6) of the intermediate element are made from boron nitride or aluminium nitride.

8. Device for the electrical heating of liquid according to any one of the preceding claims, wherein the sheath (7) is made from metal that is non-oxidisable in demineralised water.

9. Device for the electrical heating of liquid according to claim 8, wherein the sheath is made from a nickel/chromium/iron alloy, with a proportion of nickel, by mass, of at least 72% nickel, 14% to 17% chromium and 6% to 10% iron or made from 316 L stainless steel.

10. Device for the electrical heating of liquid according to any one of the preceding claims, wherein the two electrical connections (30, 31) are solid pieces.

11. Device for the electrical heating of liquid according to claim 10, wherein the two electrical connections are made from copper, nickel or molybdenum.

12. Device for the electrical heating of liquid according to any one of the preceding claims, constituting a device (1) for the electrical simulation of a nuclear fuel rod.

13. Device for the electrical simulation of a nuclear fuel rod according to claim 12, comprising a plurality of thermocouples (4) each inserted in a groove formed on the external periphery of the sheath.

14. Device for the electrical simulation of a nuclear fuel rod according to claim 13, wherein the thermocouples are N-type with a sheath made from a nickel/chromium/iron alloy, with a proportion of nickel, by mass, of at least 72% nickel, 14% to 17% of chromium and 6% to 10% iron.

15. Method for producing a device for the electrical heating of a liquid (Liq), said device (1) comprising:
- a first tube (2) made from electrically conductive material forming a resistor,
- two electrical connections (30, 31) each fitted in one of the ends of the resistor, the electrical connections being adapted to bring a direct current through the resistor and to make it emerge respectively,
- an intermediate element (6, 22), made from material that is both thermally conductive and electrically insulating, surrounding, with direct mechanical contact, respectively the resistor and the two electrical connections over at least part of their length,
- a second tube (7) forming a sheath, made from thermally conductive material and surrounding the thermally conductive intermediate element with direct mechanical contact, the sheath being intended to be immersed, over at least a major part of its length, in the liquid to be heated,
the method being **characterised in that** it comprises at least one step of restraining the sheath (7) on the intermediate element (6, 22) and the resistor (2) in order to obtain a tight fit between them.

16. Production method according to the preceding claim, wherein the restraining step is performed by a technique of hammering the outside diameter of the sheath.

17. Production method according to claim 15, wherein the restraining step is performed by putting the inside diameter of the resistor under isostatic pressure.

18. Production method according to claim 15, wherein the restraining step is performed by thermal banding, by heating the sheath by Joule effect while cooling the resistor by an internal flow of heat-transfer agent, throughout the duration of the step.

19. Method for producing a device for the electric heating of a liquid (Liq), said device (1) comprising:
- a first tube (2) made from electrically conductive material forming a resistor,
- two electrical connections (30, 31) each fitted in one of the ends of the resistor, the electrical connections being adapted to bring a direct current through the resistor and to make it emerge respectively,
- an intermediate element (6, 22), made from material that is both thermally conductive and electrically insulating, surrounding, with direct mechanical contact, respectively the resistor and the two electrical connections over at least part of their length,
- a second tube (7) forming a sheath, made from thermally conductive material and surrounding the thermally conductive intermediate element with direct mechanical contact, the sheath being intended to be immersed, over at least a major part of its length, in the liquid to be heated,
the method being **characterised in that** it comprises successively at least a step of deposition of ceramic material of the intermediate element on the resistor by spraying, a step of grinding of the intermediate element thus deposited on the resistor, a step of deposition of metal sheath material on the intermediate element by spraying and finally a step of grinding of the metal sheath.

20. Production method according to one of claims 15 to 19, wherein, once the restraining step or the step of grinding of the metal sheath has been performed, a plurality of longitudinal grooves are produced on the outside diameter of the sheath in order to insert therein a thermocouple (4) in each in order to constitute a device for electrical simulation of a nuclear fuel rod.
